# EUROPÄISCHE PATENTSCHRIFT

(11) **EP 2 466 093 B1**
(45) Veröffentlichungstag und Bekanntmachung des Hinweises auf die Patenterteilung: **06.05.2015**
(21) Anmeldenummer: 11191123.6
(22) Anmeldetag: 29.11.2011
(51) Int. Cl.: F02B 41/06, F02G 5/02

(54) **Kraftmaschine mit kombiniertem Verbrennungs- und Dampfbetrieb zur Stromerzeugung**
Power machine with combined combustion and steam operation for generating electricity
Moteur doté d'un fonctionnement à combustion et à vapeur combiné pour la production de courant

(30) Priorität: 15.12.2010 CH 20922010
(43) Veröffentlichungstag der Anmeldung: 20.06.2012
(73) Patentinhaber: Lück, Harald, 07015 Palma de Mallorca (ES)
(72) Erfinder: Lück, Harald, 07015 Palma de Mallorca (ES)
(74) Vertreter: Schmidt, Steffen

(56) Entgegenhaltungen:
- WO-A1-95/35433
- WO-A1-2005/106233
- WO-A1-2012/011067
- DE-A1- 3 429 727
- DE-C- 310 329
- DE-C- 384 890
- US-A- 1 373 509
- US-A- 4 901 531

## Beschreibung

Die Erfindung betrifft eine Kraftmaschine mit Abwärmenutzung, welche durch Dampfeinleitung und durch Verbrennung in Zylinderräumen gleichzeitig betrieben wird. Insbesondere ist die Kraftmaschine zur Stromerzeugung vorgesehen.

Bei herkömmlichen Verbrennungsmotoren bleibt die durch die Motorkühlung und den Auspuffgasen erzeugte Abwärme häufig ungenutzt. Für Verbrennungsmotoren im stationären Betrieb, wie sie beispielsweise zur Stromerzeugung verwendet werden, wird die Abwärme teilweise zur Einspeisung in einem Fernwärmenetz genutzt. Diese Nutzung der Abwärme setzt jedoch voraus, dass der Standort der Maschine so gewählt ist, dass auf kurzen Wegen die Einspeisung in ein Fernwärmenetz möglich ist. Ferner ist die Gesamtenergiebilanz solcher Kraftwerke mit Kraftwärmekopplung aufgrund der hohen Verluste in den Fernwärmeleitungen nicht zufrieden stellend.

US 4 901 531 offenbart einen Motor mit mehreren Zylindern, welche mit einem Dieselkraftstoff angetrieben werden, sowie wenigstens einem Zylinder, welcher mit Dampf eines Rankine-Zyklus angetrieben wird.

Der vorliegenden Erfindung liegt die Aufgabe zugrunde, eine effizientere Nutzung der durch einen Verbrennungsmotor erzeugten Abwärme bereitzustellen, die insbesondere auch Standortunabhängig möglich ist.

Die Erfindung stellt dazu eine Kraftmaschine mit kombiniertem Verbrennungs- und Dampfbetrieb bereit, wobei die Kraftmaschine mehr als einen Zylinder umfasst, in denen jeweils ein Kolben gelagert ist, wobei die Kolben mit einer gemeinsamen Kurbelwelle der Kraftmaschine gekoppelt sind, wobei wenigstens einer der Kolben durch Verbrennung im Zylinderraum angetrieben wird und wenigstens ein weiterer der Kolben durch Einleitung und Expansion von Dampf im Zylinderraum angetrieben wird, wobei der Dampf in einer Dampferzeugungseinrichtung außerhalb des Zylinderraums erzeugt wird und die Dampferzeugungseinrichtung wenigstens teilweise durch Abwärme der Kraftmaschine betrieben wird.

Die Erfindung macht sich demnach zunutze, dass auch die Abwärme des Verbrennungsmotors mittels einer Dampferzeugungseinrichtung und einer speziellen Gestaltung wenigstens einiger der Zylinder in der Kraftmaschine, welche durch Dampfexpansion angetrieben werden, ebenfalls in mechanische Arbeit umgewandelt wird, die anschließend durch einen nachgeschalteten Generator zur Verstromung zur Verfügung stehen. Diese Art von Verstromung der Abwärme ermöglicht die Nutzung der Abwärme z.B. für Motoren im stationären Betrieb eines Kraftwerks ohne die Abwärme lediglich an die Umwelt abzugeben oder mit geringem Wirkungsgrad zur Gebäudeheizung einzusetzen.

Gemäß einer bevorzugten Ausführungsform wird die Abwärme der Kraftmaschine aus Abgasen und/oder aus einer Flüssigkeitskühlung der im Verbrennungsbetrieb arbeitenden Zylinder in einen Wärmetauscher der Dampferzeugungseinrichtung geleitet. In der Regel wird die Abwärme nicht ausreichen, um alleine für die Dampferzeugung zu sorgen. Die Dampferzeugungsvorrichtung kann noch einen Brenner aufweisen, der durch andere Kraftstoffe, wie weiter unten beschrieben, betrieben wird. Durch die Nutzung der Abwärme der Kraftmaschine wird jedoch die Gesamtenergiebilanz der Dampferzeugungsvorrichtung erheblich verbessert.

Gemäß einer bevorzugten Ausführungsform werden der eine oder die mehreren Kolben, die durch Verbrennung im Zylinderraum angetrieben werden, mittels der Verbrennung eines durch Vergasung von Biomasse erzeugten Gasgemisches betrieben. Insbesondere ist die Vergasung von Pflanzenteilen bevorzugt, wie z.B. Holzabfälle, Hackschnitzel, Stroh oder andere schnell wachsende Gräser oder Schilfe oder Getreide oder Melasse. Es können auch andere Abfälle weiterverwertet werden. Beispielsweise kann aus Tiermist oder aus getrocknetem Klärschlamm, ggf. durch vorhergehendes Trocknen und Pelletieren, ein für einen Verbrennungsbetrieb geeignetes Gasgemisch erzeugt werden.

Gemäß einer bevorzugten Ausführungsform werden der eine oder die mehreren Kolben, die durch Verbrennung im Zylinderraum angetrieben werden, ferner durch Flüssigkraftstoff, wie insbesondere Pflanzenöle oder aus Biomasse gewonnene Alkohole, betrieben. Ferner können einige der im Verbrennungsbetrieb arbeitenden Zylinder auch durch Biogas angetrieben werden.

Erfindungsgemäß weisen mehrere der Zylinder der Kraftmaschine eine voneinander unabhängige Ventilsteuerung auf. Insbesondere ist eine elektrische Ventilsteuerung bevorzugt. Damit können die Zylinder auf die unterschiedlichen Brennstoffe eingestellt werden. Abhängig von dem Brennverhalten des betreffenden Kraftstoffes oder zündfähigen Gasgemisches kann durch die Ventilsteuerung, und optional auch durch eine verstellbare Zündung, der Wirkungsgrad der betreffenden Zylinder optimiert werden.

Ferner kann Erfindungsgemäß durch die unabhängige Ventilsteuerung und durch Umschalten der Zuleitung zu den betreffenden Zylinderräumen die Zylinder alternativ im Verbrennungsbetrieb, d.h. z.B. durch Pflanzenöl, Alkohol oder durch Vergasung von Biomasse gewonnenen Gasen, und dem Dampfbetrieb arbeiten. Damit können abhängig von der zur Verfügung stehenden Abwärme des Motors mehr oder weniger Zylinder im Dampfbetrieb betrieben werden oder durch einen der alternativen Brennstoffe betrieben werden . Ferner ist das Umschalten der Zylinder vom Verbrennungs- zum Dampfbetrieb auch von Vorteil, um Zylinder durch den Dampfbetrieb zu reinigen, die Brennstoffablagerungen aufweisen können.

In einer bevorzugten Ausführungsform ist die Kraftmaschine mit einem Generator zur Stromerzeugung gekoppelt. Insbesondere sind Generatoren zur Erzeugung von Wechselstrom vorgesehen, die zur Stromeinspeisung in das Netz eingerichtet sind. Vorzugsweise ist zur Erzeugung eines Wechselstroms mit der für das Netz notwendigen Frequenz eine Frequenzstabilisierung an der Kombination aus der Kraftmaschine und dem Generator vorgesehen. Die Frequenzstabilisierung kann z.B. durch Umschalten der zur Verfügung stehenden Kraftstoffe und der Anzahl der Zylinder, die im Dampfbetrieb arbeiten, erzielt werden. Insbesondere sind durch Flüssigkraftstoffe oder durch Biogas kurzzeitige Änderungen im Leistungsverhältnis des Motors möglich, weil sich diese Kraftstoffe gut dosieren lassen. Die durch die Vergasung von Biomasse erzeugten brennbaren Gasgemische sind aufgrund der Trägheit der Vergasungseinrichtung nicht so einfach zu dosieren. Ferner ist es auch die zur Verfügung stehende Dampfmenge durch die Dampferzeugungsvorrichtung nicht kurzfristig zu regeln. Die Regelung des konstanten Motorbetriebs erfolgt daher vorteilhafterweise durch die Zylinder, welche mit Flüssigkraftstoffen betrieben werden. Gegebenenfalls kann auch der Einsatz von herkömmlichen fossilen Brennstoffen, wie Dieselkraftstoff, in Ergänzung zu den vorhergehend genannten Kraftstoffen vorgesehen sein.

Gemäß einer bevorzugten Ausführungsform kann ein Teil der Abwärme der Kraftmaschine und/oder ungenutzte Restwärme der Dampferzeugungseinrichtung einer Einrichtung zum Trocknen von Biomasse zugeführt werden. Da für das Trocknen der Biomasse geringere Temperaturen notwendig sind als für die Dampferzeugungsvorrichtung, kann die Abwärme des Motors besonders effizient genutzt werden. Zunächst gelangen die heißen Abgase und/oder das Kühlmittel, welches eine Kraftmaschine kühlt, zu der Dampferzeugungseinrichtung. Dort werden sie nach Durchströmung des Wärmetauschers auf eine geringere Temperatur abgekühlt. Diese geringere Temperatur kann jedoch in einem nachfolgenden Schritt noch zur Trocknung der Biomasse eingesetzt werden, die in nachfolgend einer Vergasungsvorrichtung zugeführt werden kann.

Gemäß einer bevorzugten Ausführungsform wird die Dampferzeugungseinrichtung in Ergänzung zu der Abwärme der Kraftmaschine durch die Verbrennung von aus Biomasse erzeugtem Gas, Pflanzenöl und/oder einem aus Biomasse erzeugten Alkohol betrieben. Durch diese konventionelle Verbrennung werden die notwendigen Temperaturen erzielt, die zu der Dampferzeugung notwendig ist. Der Wärmetauscher, der mit der Abwärme der Kraftmaschine betrieben wird, kann beispielsweise als Vorstufe zur Vorerwärmung der flüssigen Phase, aus der der Dampf erzeugt wird, genutzt werden. Dabei ist Wasser bevorzugt.

Gemäß einer bevorzugten Ausführungsform ist die Kraftmaschine ferner mit einer Einrichtung zur Vergasung von Biomasse gekoppelt und Abwärme der Vergasungseinrichtung wird zum Betrieb der Dampferzeugungseinrichtung genutzt. Bei der Vergasung der Biomasse entsteht Gas mit hohen Temperaturen, das für die Einleitung in den Motor abgekühlt werden müssen. Dies erfolgt in einem Gaskühler. Die Abwärme, die in dem Gaskühler anfällt, kann in einer Vorstufe für die Dampferzeugungsvorrichtung genutzt werden.

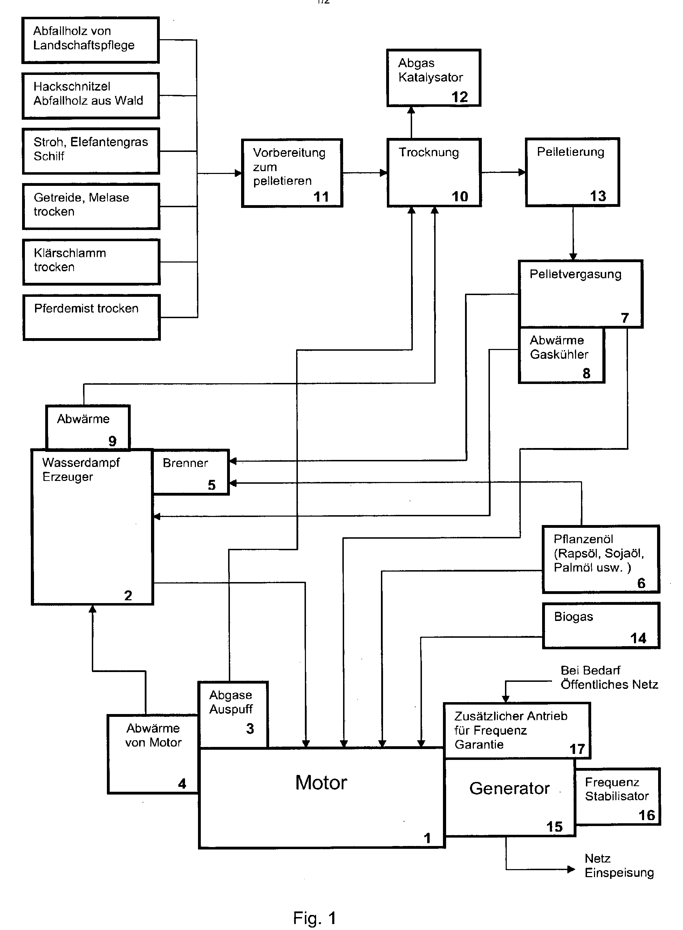

Ein vollständiges System einer bevorzugten Ausführungsform der Kraftmaschine nach der vorliegenden Erfindung mit den daran angeschlossenen Modulen wird nachfolgend anhand der beigefügten Figur beschrieben. Es zeigen
- Figur 1: ein Blockdiagramm des vollständigen Systems aus einer Kraftmaschine und dem zum Betrieb in der Kraftmaschine angeschlossenen Komponenten, und
- Figur 2: ein schematisches Ablaufdiagramm eines Zylinders des Motors im Verbrennungsbetrieb und im Dampfbetrieb.

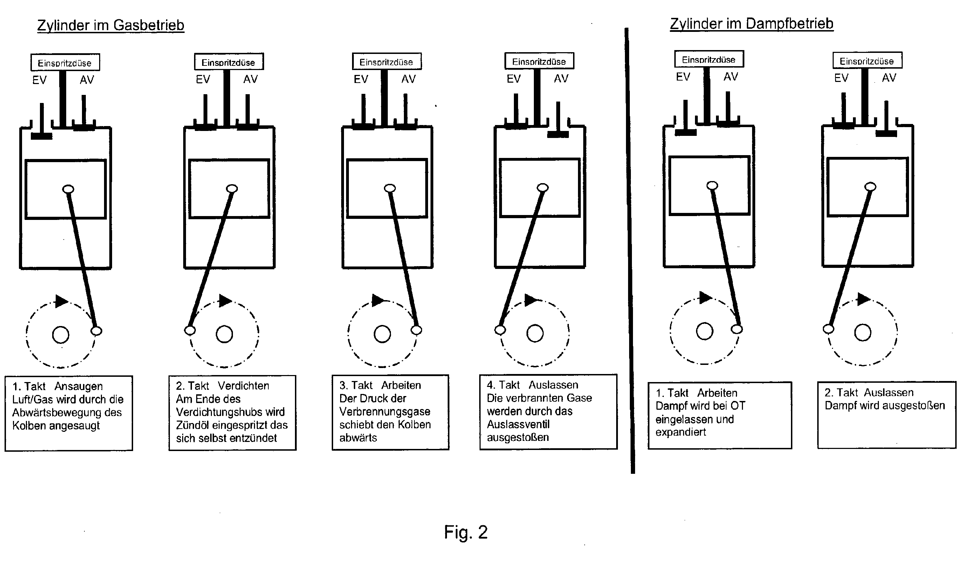

Das Herzstück der Anlage zur Stromerzeugung bildet eine Kraftmaschine in Form des Motors 1. Der Motor 1 ist dafür eingerichtet, variabel mit konventionellen Brennstoffen wie Pflanzenöl (Rapsöl, Sojaöl, Palmöl usw.), Biogas und/oder einem aus Biomasse gewonnenen Gasgemisch betrieben zu werden. Ferner wird ein Motor durch Wasserdampf aus einem Wasserdampferzeuger 2 gespeist. Der Motor 1 umfasst mehrere Zylinder, die auf eine gemeinsame Kurbelwelle wirken. Die Zylinder können alternativ mit einem Brennstoffgemisch in einem Verbrennungsbetrieb oder mit Wasserdampf in einem Dampfbetrieb arbeiten. Dazu umfasst der Motor eine variable Ventilsteuerung, die auf das jeweilige Brennstoffgemisch angepasst werden kann. Im Verbrennungsbetrieb arbeitet der jeweilige Zylinder, von denen einer beispielhaft in Figur 2 dargestellt ist, im Viertaktprinzip. Ferner kann die Zuleitung zu den Ventilen auch auf Dampf umgeschaltet werden. Die Ventilsteuerung der Zylinder, die mit Dampf betrieben werden, wird verändert. Durch die Einlassventile des Zylinders wird Wasserdampf eingeleitet, der im Arbeitstakt den Kolben durch Expansion des Dampfs antreibt (siehe 1. Takt im Dampfbetrieb in Figur 2). Nach der Expansion des Dampfs wird dieser durch die Auslassventile wieder abgeleitet (siehe 2. Takt im Dampfbetrieb in Figur 2). Im Dampfbetrieb ist demnach jeder zweite Takt ein Arbeitstakt, in dem der Kolben angetrieben wird. Die Ein-und Auslassventile werden daher bei jedem Takt geöffnet bzw. wieder geschlossen im Unterschied zum Verbrennungsbetrieb. Eine Besonderheit des Motors 1 besteht ferner darin, dass mehrere, vorzugsweise alle Zylinder des Motors einzeln von dem Betriebsmodus mit Dampf zu dem Verbrennungsbetrieb mit verschiedenen der genannten Brennstoffe umgeschaltet werden kann. Dies ist durch die elektrische Ventilsteuerung, d.h. ohne mechanische Kopplung der Ventile zur Kurbelwelle, möglich. Die elektrische Ventilsteuerung erlaubt es, die Ein- und Auslassventile vom Viertaktprinzip in Verbrennungsbetrieb zum Zweitaktprinzip im Dampfbetrieb umzuschalten. Ferner kann die Ventilsteuerung im Verbrennungsbetrieb auf die unterschiedlichen Brennstoffe eingestellt werden.

Die Abwärme des Motors 1 wird aus Abgasen des Motors, d.h. der Zylinder, die im Verbrennungsbetrieb arbeiten, gewonnen. Dazu ist ein entsprechender Wärmetauscher für Abgase aus dem Auspuff 3 vorgesehen. Ferner kann die Abwärme des Motors auch aus einem Kühlkreislauf des Motors, z.B. einem Flüssigkeitskühlkreislauf, gewonnen werden. Die Abwärme des Motors wird über einen Wärmetauscher 4 dem Dampferzeuger 2 zugeleitet. Der Dampferzeuger, der im Wesentlichen in der Art eines konventionellen Kessels arbeitet, wird zusätzlich zu der Abwärme vom Motor über den Wärmetauscher 4 durch einen Brenner 5 betrieben. Der Brenner 5 kann Pflanzenöl (Rapsöl, Sojaöl, Palmöl usw.) 6 und/oder einen aus einer Pelletvergasung gewonnenes zündfähiges Gasgemisch verbrennen. In einer Vorrichtung zur Pelletvergasung 7, welche weiter unten beschrieben wird, entsteht ferner zwangsläufig Abwärme. Diese kann durch einen Abwärmegaskühler 8 ebenfalls genutzt werden, um als Vorstufe zur Dampferzeugung der Dampferzeugungseinheit 2 zugeführt zu werden.

Bei der Dampferzeugung im Dampferzeuger 2 wird das Medium, welches die Abwärme vom Motor 1 über den Wärmetauscher 4 zum Dampferzeuger 2 transportiert, auf eine niedrigere Temperaturen, die nicht mehr zur Dampferzeugung genutzt werden kann, abgekühlt. Diese Abwärme 9 kann jedoch noch einer Trocknungseinheit 10 zugeführt werden, die dafür bestimmt ist, Biomasse zur anschließenden Pelleterzeugung zu trocknen.

Die Biomasse kann Abfallholz, z.B. aus der Landschaftspflege oder Hackschnitzel aus dem Wald umfassen. Ferner sind Stroh und schnell wachsende Gräser, wie Elefantengras oder Schilf, sowie Getreide, Melasse bevorzugt. Es kann auch getrockneter Klärschlamm oder Tiermist zur Pelletverarbeitung verwendet werden. Die genannten Materialien werden nach einer entsprechenden Zerkleinerung in einer Einrichtung zur Vorbereitung zum Pelletieren 11 der Trocknungseinheit 10 zugeführt. Die Abgase der Trocknungseinheit 10 werden einem Abgaskatalysator 12 zugeführt. Nach Reduzieren der Restfeuchte der Biomasse in der Trocknungseinheit 10 wird die Biomasse einem Pressvorgang in einer Einrichtung zur Pelletierung 13 zugefügt. Nach Formen der Pellets in der Einrichtung 13 werden die Pellets in die Pelletvergasungseinrichtung 7 befördert. In der Pelletvergasungsvorrichtung werden die Pellets in der Art einer Holzvergasung in ein zündfähiges Gasgemisch umgewandelt. Das Gasgemisch muss vor der Einleitung in den Motor 1 zunächst noch abgekühlt werden. Die dabei entstehende Abwärme wird über dem Gaskühler 8 zu der Dampferzeugungseinheit 2, wie vorhergehend beschrieben, weitergeleitet.

Aus der vorhergehenden Beschreibung wird deutlich, dass die Abwärme des Motors 1 stufenweise zunächst in der Dampferzeugungseinheit 2 und später noch zum Trocknen der Trocknungseinheit 10 verwendet werden kann. Dadurch wird die benötigte Menge von zu verbrennenden Kraftstoffen wie das Pflanzenöl 6, Biogas 14 oder ggf. fossile Brennstoffe (in der Figur nicht dargestellt) reduziert.

An dem Motor 1 ist der Generator 15 angeschlossen, der zur Stromerzeugung und Einspeisung des Stroms in das Netz eingerichtet ist. Ein zusätzlicher Frequenzstabilisator 16, der auf das Motormanagement des Motors 1 Einfluss nehmen kann, um die Drehzahl stabil zu halten, ist vorgesehen, um eine Wechselstromerzeugung mit der notwendigen Netzfrequenz zu ermöglichen. Ferner ist noch ein Zusatzantrieb 17, z.B. in Form eines Elektromotors, vorgesehen, um die notwendige Drehzahl für den Betrieb des Generators 16 zu halten, falls die Leistung des Motors 1 zeitweise nicht ausreicht, z.B. aufgrund eines Umschaltvorgangs im Verbrennungs- bzw. Dampfbetriebs des Motors oder in einer Aufwärmphase der Dampferzeugungsvorrichtung 2 oder der Pelletvergasungseinrichtung 7. Alternativ kann auch ein mehrstufiger Generator vorgesehen sein, der zunächst Gleichstrom erzeugt und über einen Gleichstrommotor einen Wechselstromgenerator mit konstanter Frequenz antreibt.

An den vorhergehend beschriebenen Ausführungsformen können zahlreiche Änderungen vorgenommen werden, ohne von dem Umfang der Erfindung, wie er in den Ansprüchen dargelegt ist, abzuweichen. Insbesondere können auch weitere als die genannten Brennstoffe vorgesehen sein. Beispielsweise kann vorzugsweise zum Starten des Systems auch ein fossiler Brennstoff eingesetzt werden, wobei der Betrieb mit den alternativ gewonnenen Brennstoffen für den nachfolgenden Dauerbetrieb bevorzugt ist.

## Patentansprüche

1. Kraftmaschine mit kombiniertem Verbrennungs- und Dampfbetrieb, wobei die Kraftmaschine (1) mehr als einen Zylinder umfasst, in denen jeweils ein Kolben gelagert ist, wobei die Kolben mit einer gemeinsamen Kurbelwelle in der Kraftmaschine (1) gekoppelt sind,
wobei wenigstens einer der Kolben durch Verbrennung eines Kraftstoffgemischs im Zylinderraum angetrieben wird und wenigstens ein weiterer der Kolben durch Einleitung und Expansion von Dampf in dem Zylinderraum angetrieben wird, wobei der Dampf in einer Dampferzeugungseinrichtung (2) außerhalb des Zylinderraums erzeugt wird, und die Dampferzeugungseinrichtung (2) wenigstens zum Teil durch Abwärme (4) der Kraftmaschine (1) betrieben wird, **dadurch gekennzeichnet, dass** mehrere der Zylinder der Kraftmaschine (1) eine voneinander unabhängige Ventilsteuerung aufweisen, insbesondere eine elektrische Ventilsteuerung, wobei die mehreren Zylinder variabel im Verbrennungsbetrieb oder im Dampfbetrieb antreibbar sind abhängig von einer Einstellung der Ventilsteuerung und der Zuleitungen von Dampf oder einem Brennstoffgemisch in die betreffenden Zylinderräume, wobei in Dampfbetrieb die Zuleitung zu den Einlassventilen auf Dampf umgeschaltet wird.

2. Kraftmaschine nach Anspruch 1, wobei die Abwärme (4) der Kraftmaschine (1) aus Abgasen und/oder aus einer Flüssigkeitskühlung der im Verbrennungsbetrieb arbeitenden Zylinder zu einen Wärmetauscher der Dampferzeugungseinrichtung (2) geleitet wird.

3. Vorrichtung nach einem der vorhergehenden Ansprüche, wobei der eine oder mehrere Kolben, die durch Verbrennung im Zylinderraum angetrieben werden, mittels der Verbrennung eines durch Vergasung von Biomasse erzeugten Gasgemisches betrieben werden.

4. Kraftmaschine nach einem der vorhergehenden Ansprüche, wobei der eine oder die mehreren Kolben, die durch Verbrennung im Zylinderraum angetrieben werden, durch einen Flüssigkraftstoff, insbesondere durch ein Pflanzenöl (6) und/oder einem Alkohol, betrieben werden.

5. Kraftmaschine nach einem der vorhergehenden Ansprüche, wobei der Kraftmaschine (1) mit einem Generator (15) zur Stromerzeugung, insbesondere zur Netzeinspeisung, gekoppelt ist.

6. Kraftmaschine nach einem der vorhergehenden Ansprüche, wobei Abwärme (4) der Kraftmaschine und/oder ungenutzte Restwärme (9) der Dampferzeugungseinrichtung (2) an einer Einrichtung (10) zum Trocknen von Biomasse weitergeleitet wird.

7. Kraftmaschine nach einem der vorhergehenden Ansprüche, wobei die Dampferzeugungseinrichtung (2) in Ergänzung zu der Abwärme der Kraftmaschine durch Verbrennung von aus Biomasse erzeugtem Gas, Pflanzenöl und/oder einem Alkohol betrieben wird.

8. Kraftmaschine nach einem der vorhergehenden Ansprüche, welcher ferner mit einer Einrichtung (7) zur Vergasung von Biomasse gekoppelt ist und Abwärme (8) der Vergasungseinrichtung zum Betrieb der Dampferzeugungseinrichtung (2) geleitet wird.

## Claims

1. Engine with combined combustion and steam operation, the engine (1) comprising more than one cylinder in which in each case a piston is mounted, the pistons being coupled to a common crankshaft in the engine (1), wherein at least one of the pistons is driven by the combustion of a fuel mixture in the cylinder space, and at least one further piston is driven by the introduction and expansion of steam in the cylinder space, the steam being generated in a steam generation device (2) outside the cylinder space, and the steam generation device (2) being operated at least partially by waste heat (4) from the engine (1), **characterized in that** a plurality of the cylinders of the engine (1) having valve controls, in particular electrical valve controls, independent of one another, wherein the plurality of cylinders being drivable variably in combustion operation or in steam operation, in dependence on a setting of the valve control and of the supply lines for steam or a fuel mixture into the respective cylinder spaces, wherein in combustion operation the supply line to the inlet valves is changed over to steam.

2. Engine according to Claim 1, the waste heat (4) of the engine (1) from exhaust gases and/or from liquid cooling of the cylinders operating in combustion mode being conducted to a heat exchanger of the steam generation device (2).

3. Engine according to one of the preceding claims, the one or more pistons which are driven by combustion in the cylinder space being operated by means of the combustion of a gas mixture generated by the gasification of biomass.

4. Engine according to one of the preceding claims, the one or more pistons which are driven by combustion in the cylinder space being operated by a liquid fuel, in particular by a vegetable oil (6) and/or alcohol.

5. Engine according to one of the preceding claims, the engine (1) being coupled to a generator (15) for current generation, in particular for feeding the network.

6. Engine according to one of the preceding claims, waste heat (4) from the engine and/or unused residual heat (9) from the steam generation device (2) being transferred to a device (10) for the drying of biomass.

7. Engine according to one of the preceding claims, the steam generation device (2) being operated not only by the waste heat from the engine, but also by the combustion of gas generated from biomass, vegetable oil and/or alcohol.

8. Engine according to one of the preceding claims, which, furthermore, is coupled to a device (7) for the gasification of biomass, waste heat (8) from the gasification device being conducted for the purpose of operating the steam generation device (2).

## Revendications

1. Moteur doté d'un fonctionnement à combustion et à vapeur combiné, dans lequel le moteur (1) comprend plus d'un cylindre dans lequel un piston est monté respectivement, étant entendu que les pistons sont couplés avec un vilebrequin commun dans le moteur (1),
étant entendu qu'au moins un des pistons est entraîné par la combustion d'un mélange de carburant dans la chambre de cylindres et au moins un autre des pistons est entraîné par l'introduction et l'expansion de vapeur dans la chambre de cylindres, étant entendu que la vapeur est produite dans un dispositif de production de vapeur (2) à l'extérieur de la chambre de cylindres et que le dispositif de production de vapeur (2) est alimenté au moins en partie par les rejets thermiques (4) du moteur (1), **caractérisé en ce que** plusieurs des cylindres du moteur (1) présentent une commande des soupapes indépendante les uns des autres, en particulier une commande électrique des soupapes, étant entendu que les multiples cylindres peuvent être entraînés de façon variable en fonctionnement à combustion ou en fonctionnement à vapeur indépendamment d'un réglage de la commande des soupapes et des conduites d'alimentation de vapeur ou d'un mélange de carburant dans les chambres des cylindres concernées, étant entendu qu'en cas de fonctionnement à vapeur, la conduite d'alimentation vers les soupapes d'admission est commutée sur la vapeur.

2. Moteur selon la revendication 1, dans lequel les rejets thermiques (4) du moteur (1) sont amenés à partir des gaz d'échappement et/ou d'un refroidissement liquide des cylindres actifs en fonctionnement à combustion jusqu'à un échangeur de chaleur du dispositif de production de vapeur (2).

3. Dispositif selon l'une des revendications précédentes, dans lequel le ou les pistons qui sont entraînés par combustion dans la chambre de cylindres sont alimentés au moyen de la combustion d'un mélange de gaz produit par une gazéification de biomasse.

4. Moteur selon l'une des revendications précédentes, dans lequel le ou les pistons qui sont entraînés par combustion dans la chambre de cylindres sont alimentés par un carburant liquide, en particulier par une huile végétale (6) et/ou un alcool.

5. Moteur selon l'une des revendications précédentes, dans lequel le moteur (1) est couplé avec un générateur (15) pour la production de courant, en particulier en vue de l'injection dans le réseau.

6. Moteur selon l'une des revendications précédentes, dans lequel les rejets thermiques (4) du moteur et/ou la chaleur résiduelle non utilisée (9) du dispositif de production de vapeur (2) sont acheminés vers un dispositif (10) destiné au séchage de biomasse.

7. Moteur selon l'une des revendications précédentes, dans lequel le dispositif de production de vapeur (2) est alimenté, en complément aux rejets thermiques du moteur, par la combustion de gaz, d'huile végétale et/ou d'un alcool produit à partir de biomasse.

8. Moteur selon l'une des revendications précédentes, qui est en outre couplé avec un dispositif (7) destiné à la gazéification de biomasse et dans lequel les rejets thermiques (8) du dispositif de gazéification sont acheminés pour alimenter le dispositif de production de vapeur (2).
